# EUROPEAN PATENT APPLICATION

(11) **EP 1 031 922 A2**
(43) Date of publication of application: **30.08.2000**
(21) Application number: 00301513.8
(22) Date of filing: 25.02.2000
(51) Int. Cl.: G06F 9/445

(54) **Method and system, and storage medium for installing an application program**

(30) Priority: 25.02.1999 JP 4908599
(71) Applicant: NEC CORPORATION, Tokyo (JP)
(72) Inventor: Saida, Yoshinori, c/o NEC Corporation, Tokyo (JP)
(74) Representative: Orchard, Oliver John

(57) **Abstract**

A method and system of installing an application program in which the man-hours necessary for installing the application to be developed, and for modifying the application to be transplanted and operated on another OS can be reduced. In the method and system described, an identifier for identifying a communication with an application program to be developed and a command of an instruction to the application program is included in an address in conformity with the description format of the URL address; a process according to the instruction is executed; a result of the process and user interface components used in the application program are described in a data file by using a Form function provided in a specific markup language file; and the data file is returned to the relevant Web browser. Accordingly, the client computer uses the Web browser as the Ul of the application.

## Description

The present invention relates to an installation method and system for an application program and to a storage medium storing a computer program for executing the method.

In a particular arrangement to be described below, by way of example in illustration of the invention, a Web browser is used as a user interface.

An application program is generally structured so that it can be divided into two sections, each based on their respective functions; that is, a main section for processing a target process, and an input and output section for displaying the result of a process or for receiving a user input. Generally, an application program is completed by developing these two sections.

When such an application program is installed and operated on another OS (operating system), some portions which are dependent on the OS must be revised or reorganized. In particular, the display process (on the screen) and the Ul (user interface) depend to a large extent on the OS; thus a significant revision or reorganization is necessary.

One method has previously been proposed for installing an application program newly, in which the necessary data are downloaded from a server connected via a network, and a target application program is installed on a program called a Web browser, by which the data can be referred to. This method is mainly used for providing a common display and Ul between different application programs, or for easy cooperation between the application programs.

There are four types of previously proposed methods for installing an application program, such as a mail receiving application or a scheduler, having GUI (graphical user interface) components by which new functions relating to displaying image data, outputting sound data or the like can be added to a displayed Web browser, and a necessary response to a user's input can be carried out. The four previously proposed methods are:-
(1) An application program is installed by directly embedding a target function in the source codes of the browser. In this case, an installation operation is necessary for each different type of browser. Additionally, if the newly added function includes displaying data, the API (application program interface) provided by the OS on which the application program is currently operated must be used; thus, a portion related to the API must be revised in order to operate the application program on another OS.
(2) A new function is dynamically added to the browser by using a specific interface provided in the browser for adding a new function. For example, the "Navigator" browser (provided by Netscape Communications Corporation) having a plug-in interface is of this type. In this case, modification of the source codes of the browser itself is unnecessary, and only a plug-in module for adding a new function must be developed. This method is effective only for browsers having a plug-in interface. In addition, the display function of the plug-in module depends on the OS; thus, relevant modifications are also necessary for operating the application program on another OS.
(3) If Java, or the Java script programming language can be used in the browser, the target application program can be described using this language. That is, the browser must have a function for executing such a language, and functions of the application program written in this language are limited by library functions provided by the language.
(4) A CGI (common gateway interface) script is used. In this case, the Ul on the browser is described using a Form specified in HTML (hyper-text markup language), and when the user clicks a "send" button also displayed using the Form, the current selection status of each Ul component, such as a radio button, an edit box, and a list box, and including the user input status, can be communicated to a server corresponding to the URL (uniform resource locator) designated in the Form, and the script program on the server is able to analyse the communicated data and return an HTML file having contents suitable for the current user's selection and input status. In this case, the Form of the HTML must be operable in the browser; however, ordinary HTML browsers can satisfy this condition. When the client side displays the Ul described by the above Form, each relevant process is executed by the script on the server side. Accordingly, there is no means for accessing a file on the client side; thus, this method is not suitable for application programs such as mail processing software or schedule management software. Additionally, as the application program is executed on the server, this method is also not suitable for an application program requiring a high-speed response or a high execution speed.

The above methods (1) to (4) have the following problems.

The first problem is if a general application-program developing method is employed, many man-hours are necessary for the installing or transplanting operation. This is because when a plurality of application programs are developed, the general display section and the Ul display section for responding to user's inputs must be installed for each application program. In addition, such a display section and each Ul component depend largely on the performance of the OS; thus, the required man-hours are also increased for modifying the application program so as to install it on another OS.

The second problem is that when an ad-on type application program is installed on the browser, the browser itself must be modified. This is because direct installation on the browser, or the addition of a plug-in interface or a Java language executing function to the browser is necessary, except for the above method (4).

The third problem is that when the ad-on type application (program) installed on the browser is operated on another OS, the modification of the portions or sections dependent on the OS is necessary. In particular, most of the portions relating to the data display depend on the OS; thus, many man-hours are needed. This is because the ad-on type application can execute the Ul or text display; however, the API provided by the OS on which the relevant OS is operated must be used for such a process of displaying Windows, Ul components, or text data. Therefore, in order to install the application program on another OS and to operate the program on the OS, the portions dependent on the OS must be modified. However, in the above method (4) using the CGI, the process for displaying the Ul components or text data is carried out using the HTML display function of the browser, and the ad-on type application side has no display section dependent on the OS. Therefore, the above problem can be prevented in the method (4).

The fourth problem is that if installation is carried out using the above-explained CGI, the execution speed is lower. This is because when the CGI is used, the client terminal side only provides the Ul display function of the ad-on type application program, and sends the result of the user input to the server side. That is, the script program on the server side analyses the result of the user's input operation and executes each process; thus, data transmission via a network is necessary and the execution speed is lower in this case.

The fifth problem is that when the above CGI is used, the possible functions of the application program are limited. This is because the script program actually executes the processes on the server; thus, there is no means for accessing the user's source (such as files stored in the user's hard disk) on the client side. Therefore, it is difficult to develop an application program which needs to store user data.

A method and system for installing an application program, and a storage medium storing a computer program for executing the method to be described below, by way of example in illustration of the present invention, includes the use of a general Web browser operating on the OS on which a target application program is operated and which can be used as the display and user interface sections, thereby easily enabling the application program to be developed, adding a new function to the existing application program, and transplanting the application program to another OS, so that the productivity and maintainability can be improved.

In one particular arrangement to be described by way of example in illustration of the present invention, an application program installing method is used in a client-server system in which server computers having Web servers and client computers having Web browsers are connected to each other via a network, and the client computer uses the Web browser as a user interface of an application program to be developed, the method including the steps of:
including an identifier for identifying communication with the application program and a command of an instruction to the application program in an address in conformity with the description format of the URL address;
executing a process according to the instruction;
describing the result of the process and user interface components used in the application program in a data file by using a Form function provided in a specific markup language file; and
returning the data file to the relevant Web browser.

In another arrangement to be described below, by way of example in illustration of the present invention, an application program installing system is used in a client-server system in which server computers having Web servers and client computers having Web browsers are connected to each other via a network, and the client computer uses the Web browser as a user interface of an application program to be developed, the application program installing system including:
a command dispatch section for analysing a request on the URL format sent from the Web browser, and detecting whether the sent request is a general file request or a command of an instruction to the application program, wherein:
   if the sent request is a general file request, the command dispatch section accesses the target server computer and downloads a target file, and sends the file to the Web browser which sent the request, or
   if the sent request is a command of an instruction to the application program, the command dispatch section activates the target application program and sends the command to the application program; and
a markup language file output section for sending the relevant Web browser a specific markup language file in which the result of a process according to the command of the instruction and user interface components used in the application program are described.

In yet a further arrangement to be described by way of example in illustration of the present invention a computer-readable storage medium is used in a client-server system in which server computers having Web servers and client computers having Web browsers are connected to each other via a network, and the client computer uses the Web browser as a user interface of an application program to be developed, the medium storing a computer program for making the client computer execute an operation including the steps of:
receiving the URL address of the relevant Web browser;
analysing the received URL and determining whether the URL is a general URL address used by the Web browser for downloading a data file, or is a URL address including a command of an instruction to an application program to be developed, wherein:
if the URL is a URL address including a command of an instruction to an application program to be developed:
   analysing the URL address and determining the target application program corresponding to the instruction, and activating the application program and sending the instruction to the application program;
   making the application program which receives the instruction describe a result of a process according to the instruction and user interface components for receiving user inputs for enabling the user to use functions of the application program in a data file by using a function of a specific markup language program;
   returning the described data file to the relevant Web browser and using the Web browser as the user interface of the application program in a manner such that the result and the user interface components are displayed by the Web browser.

In arrangements to be described, by way of example in illustration of the present invention, when a URL including a specific character sequence is designated via a general Web browser, a request of any type (e.g., a request for displaying an initial screen or picture, or a request for updating data) included in the URL can be sent to the target application program by receiving an HTTP command and transferring it to the target application program. The target application program analyses the command and executes a process according to the user's request. Such a general Web browser is used as the Ul (user interface) of the application (program), thereby converting the screen output (including text data indicating the results of the process executed by the application, Ul components, such as buttons and a list box, or the like) into a markup language file such as an HTML format file. This markup language file is then returned as a response to the HTTP command which was sent from the Web browser. When the general Web browser displays the markup language file on the screen, if the user selects a Ul component on the screen and sends on the result, then the result is received by a section for receiving the HTTP command and for transferring it to the target application, and sends an HTML file according to the user's input to the Web browser in a similar way to that explained above.

In such arrangements to be described below, by way of example in illustration of the present invention, the following effects can be obtained:
(1) A general Web browser can be used as a screen display or user's input receiving section of a target application program to be developed, by using, for example, the Form function of the HTML specification. Therefore, a new application program can be easily developed. That is, only by making an HTML file indicating the Ul (user interface) and output the results of the application, the Web browser side displays the Ul and results according to the HTML specification, and receives user's inputs. Therefore, it is unnecessary for the new application side to develop a corresponding section, thereby greatly reducing the man-hours necessary for the development. Here, in the arrangements to be described, by way of example in illustration of the present invention, no modification is necessary in the general Web browser.
(2) In the previously proposed methods for expanding a function of an application, it is necessary to generate Ul components (such as a menu list or a tool bar) for calling or activating the function, and to add a process for displaying the results output according to the function. Therefore, a large number of man-hours is necessary. In contrast, in the present arrangement, data necessary for displaying such Ul components and output the results can be sent to the Web browser in the HTML file format; thus, the actual display operation (onto the screen) is performed at the Web browser side. Therefore, it is only necessary to modify a part of the HTML file in this case. As for development of the other sections (except for the display and Ul sections) necessary for expanding the function, there is no significant difference between the previously proposed method and that of the present arrangement. Therefore, with the present arrangement, it is comparatively easy to expand a function of an application and to change the contents of the Ul.
(3) It is also comparatively easy to transplant or install a developed application on another OS. This is because the operations of displaying general data or the Ul components, depending on the functions of the OS on which the target application is operated, are performed by an existing Web browser, and thus the application itself does not have a corresponding function. Therefore, when the application is installed on another OS, no modification relating to such display operations is necessary. If an application program is developed using a previously proposed method, considerable modification of a screen display section dependent on the relevant OS or a Ul-component display section is necessary for using functions provided by the OS; thus, many man-hours are necessary. In contrast, when an application program is developed in the present arrangement, a Web browser in the HTML format, operable on the OS on which the application program is operated, is used, or the application program is developed independently of the OS.
(4) In comparison with an application program using a conventional CGI script which uses a Form function of the HTML, an application program in the present arrangement has a higher execution speed and a higher flexibility for installation. This is because when the CGI script is used, the results of the user input operation are analysed and a script program for generating an HTML file suitable for the results is operated at the server side. Therefore, the necessary data are transmitted and received via a network; thus, it takes a considerable time from the time when the user clicks the "send" button displayed via the Web browser to the time when the HTML file for displaying the next picture shown on the screen is received. In contrast, according to the present arrangement, the application module corresponding to the script program of the CGI script is operated on the client-side terminal; thus, the speed of communication with the Web browser is higher.
(5) If the operation is performed at the server side, as in the case of the above CGI script, the sources at the client side (such as files stored in the hard disk of the client) cannot be directly used; thus, possible application programs are limited. For example, a mail application or a scheduler cannot be installed using the CGI script in practice. This is because (i) user data cannot be stored on a disk in the client computer by using the CGI script (because no means for such storage is provided in the Form specification of the HTML, or in the specification of the Web browser suitable for the HTML), and (ii) all of the user data cannot be transferred in practice to the server computer so as to store the data in a disk of the server computer, from the viewpoint of the communication speed of the network, data capacity, disk capacity of the server computer, and the like. In contrast, in the present arrangement, the application module is operated at the client side; thus, the client source can be freely accessed and used. Accordingly, each process in the application module can be performed independently of the HTML or browser specification, except that a process for communicating with the Web browser is carried out using the commands included in the URL and using the HTML file format.

Accordingly, a general Web browser operated on an OS, in which the target application program to be developed is operated, can be used as the Ul or screen displaying section of the application program, thereby reducing the man-hours required to develop and transplant the target application program.

The following description and drawings disclose, by means of an example, the invention which is characterised in the appended claims, whose terms determine the extent of the protection conferred hereby.

In the drawings:-
Fig. 1 is a block schematic diagram for use in describing the operation of one arrangement,
Fig. 2 is a flowchart for use in describing the operation of the Web browser 110 shown in Fig. 1,
Fig. 3 is a flowchart for use in describing the operation of the HTTP command dispatcher 120 shown in Fig. 1, and
Fig. 4 is a flowchart for use in describing the operation of the arrangement when the Web browser is used as the Ul of a target application.

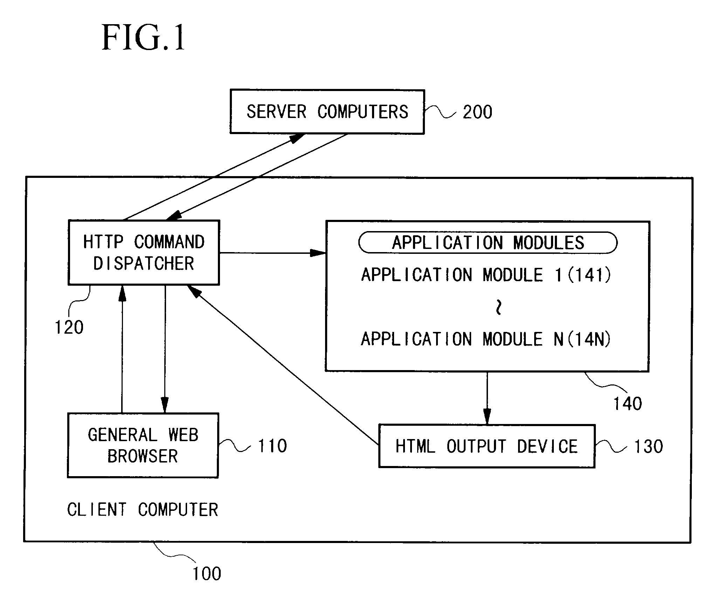

The arrangement shown in Fig. 1 includes a client computer 100 and server computers 200 for use in an application program installing system. The client computer 100 and the server computers 200 are connected to each other via a network.

The client computer 100 includes a general Web browser 110, an HTTP (hyper text transfer protocol) command dispatcher 120, an HTML output device 130, and application modules 140. The application modules 140 include an application module 1 (i.e., 141) to an application module N (i.e., 14N).

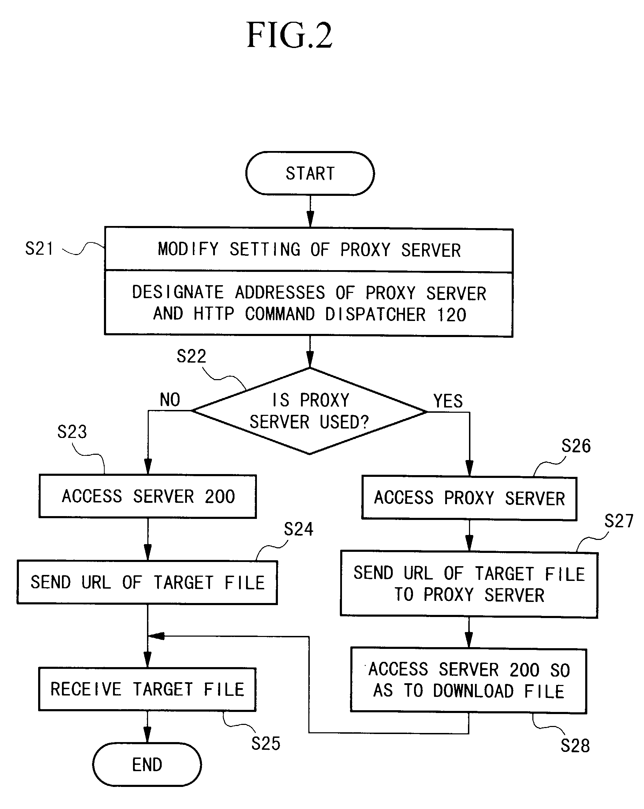

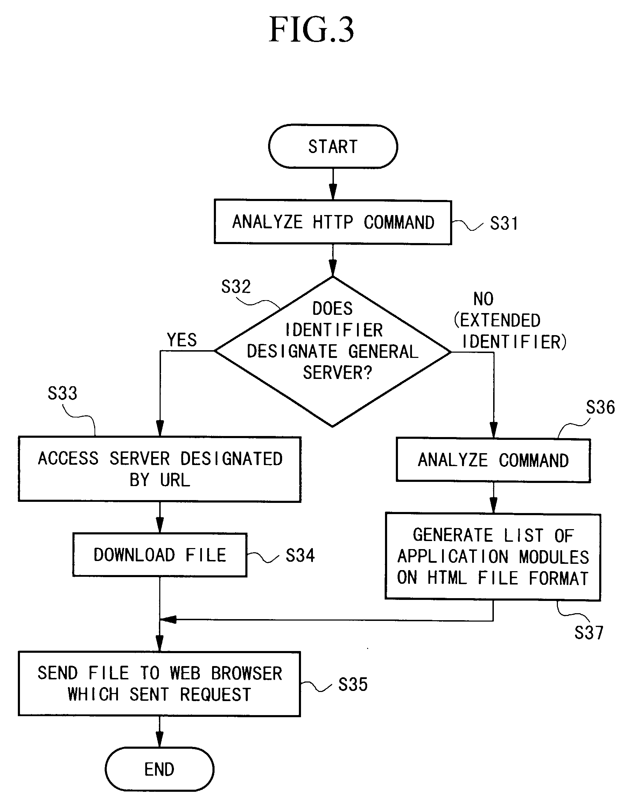

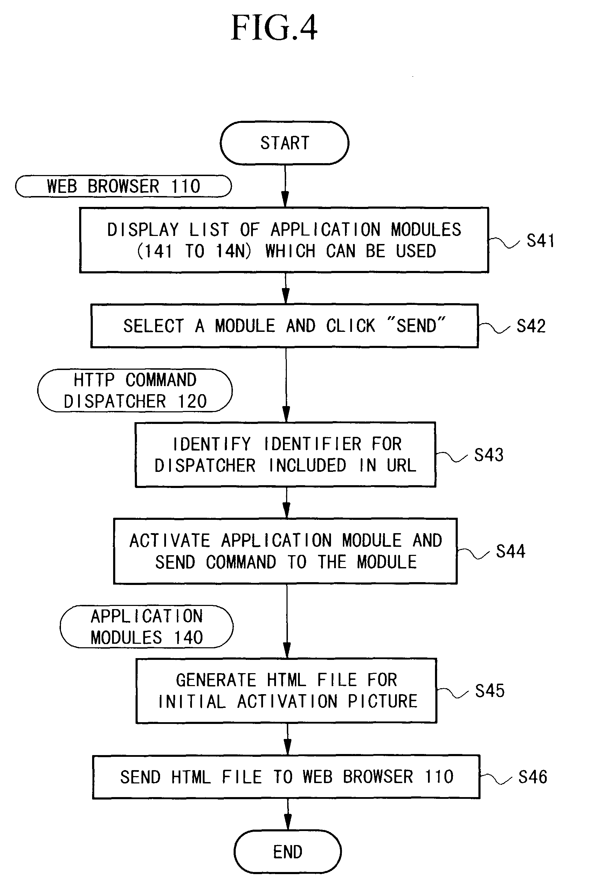

Figs. 2 to 4 are flowcharts for use in describing the operation of the arrangement of Fig. 1. Fig. 2 shows the operation of the Web browser 110, Fig. 3 shows the operation of the HTTP command dispatcher 120, and Fig. 4 shows the operation of the Web browser 110 and HTTP command dispatcher 120, when the Web browser 110 is used as the Ul of the target application program.

Referring to the drawings, first the setting of the proxy server of the general Web browser 110 is modified so that the HTTP command dispatcher 120 can receive HTTP commands sent by the Web browser 110 (see step S2I in Fig. 2). In the general Web browser 110, it is possible to modify the setting of the proxy server. Here, the general Web browser means Web browsers which are marketed and thus distributed to general users. It also includes Web browsers to be developed and marketed in the future.

Generally, if the general Web browser 110 does not use the proxy server, the Web browser directly accesses a server (i.e., one of the server computers 200) which contain a target file, and transmits the URL of the target file by using the HTTP command format (see steps S22, S23, and S24). In response, the target file is sent from the server computers 200 (see step S25).

On the other hand, if the proxy server is used, then when the Web browser 110 downloads a target HTML file from a server (i.e., one of the server computers 200) connected to a network, the Web browser does not directly access the server which contains the target file, but accesses the proxy server and sends the proxy server the URL of the target file on the HTTP command format (see steps S22, 526, and S27). The proxy server then accesses the server which contains the target file and downloads the target file (see step S28), and finally the proxy server sends the Web browser the target file (see step S25).

The proxy server generally operates on another computer connected to the client computer 100. The present arrangement employs a mechanism to use the proxy server (by the general Web browser), that is, it uses the setting of the proxy server in the general Web browser 110. More specifically, the address of the HTTP command dispatcher 120 is designated as the address of the proxy server, so that a file-requesting an HTTP command sent by the Web browser 110 is sent to the HTTP command dispatcher 120. Here, the HTTP command dispatcher 120 is an application program independent of the general Web browser 110, and is operated on the client computer 100.

The operation which is carried out when the general Web browser 110 sends a general HTML requesting command is as follows:

First, the HTML file requesting command including the URL of the target file is sent from the Web browser 110 to the HTTP command dispatcher 120. The HTTP command dispatcher 120 analyses the HTTP command which is sent (see step S31). If the URL designates a file in a general server among the server computers 200 (e.g., "http://www.nec.co.jp/index.html") the HTTP command dispatcher 120 accesses the server computer designated by the URL and downloads the file (see steps S32, S33, and S34). The HTTP command dispatcher 120 then sends this file to the general Web browser 110 in response to the HTML file request from the Web browser (see step S35).

As explained above, only in the above procedure, the HTTP command dispatcher 120 operates in the same way as a general proxy server when the operation is observed from the general Web browser 110 side.

The operation carried out when the Web browser 110 is used as the Ul of an application program will be explained below. This is a distinctive operation.

First, a command in the URL format is input into a URL-input edit box of the Web browser 110, so as to send, for example, an initial display requesting a command in the URL format to the HTTP command dispatcher 120. In the present arrangement, in order to prevent any modification of the general Web browser 110, the URL format and the protocol type (the part "http://" of the above example address "http://www.nec.co.jp") should not be changed. Therefore, the URL is constructed using a format such as "http://an identifier for the HTTP command dispatcher/a command".

For example, in the above case, the URL "http://dispatcher/initial" is sent to the HTTP command dispatcher 120, thereby making the dispatcher recognize that the command sent is not a general HTTP command but a specific command to the HTTP command dispatcher.

In order to send to the HTTP command dispatcher 120 an initial display requesting command, a plurality of methods can be used, other than the method using a URL-input edit box.

For example, a command to be input is included in the HTML file by using an anchor tag, and when the HTML file is displayed via the browser, if the anchor tag is clicked, then the above URL is sent by the browser. In another example, a target command is stored in the URL format in a file, called a bookmark file, which is generally provided in the Web browser for storing the URL, and when the bookmark is designated, the target command is sent by the browser.

The HTTP command dispatcher 120 which received the command sequence recognizes that this command is a specific command for the dispatcher by identifying the identifier for the HTTP command dispatcher (see step S32), and then analyses the following command (see step S36). Here, the command is "initial"; thus, the HTTP command dispatcher 120 determines that the received command is an initial display requesting command. Though the developer of the application should know the initial display requesting command or other commands explained later, the general Web browser 110 itself only sends the designated URL; thus, no modification nor functional expansion is necessary for the existing Web browser.

The HTTP command dispatcher 120 which has received the initial display requesting command uses the HTML output device 130 so as to generate a list of application modules currently registered in the application modules 140 by using the HTML file format including a tag called "Form" which is defined using the HTML programming language specification (see step 537). Therefore, the Form tag (defined by the HTML language specification) is used in the HTML file, and accordingly, when the relevant HTML file is displayed by the Web browser 110, the Ul components such as the edit box, radio button, and list box can be arranged in the display screen so that the user input can be received. Here, strictly, the edit box is designated using the INPUT tag, and the list box is designated using the SELECT and OPTION tags, that is, such tags other than the Form tag are used. However, in most cases, these tags are summarized as the Form function; thus, the general term "Form tag" is commonly used here.

When the user clicks the "send" button defined by the Form tag, data can be sent in a format including the current input situation of the Ul components (such as text data input via the users operation into the edit box, or the item in the list box selected by the user) to the URL address (of the addressee) designated in the HTML file.

When the general Web browser 110 and HTML file are used, the sent data are analysed using a script program (called "CGI script") in the computer corresponding to the designated URL, and an HTML file suitable for the current user's inputs is returned. The present arrangement uses such a specification of the Form tag. The operation using this Form tag is an operation defined by the HTML programming language; thus, the general Web browser 110 can accept the operation. In the next step, an HTML file generated by the HTML output device 130 is sent by the HTTP command dispatcher 120 as a response to the Web browser (see step (S35).

The operation carried out when the Web browser is used as the Ul of an application program will now be explained with reference to Fig. 4. When the existing Web browser 110 receives the HTML file described above, the browser displays the necessary data on the screen (see step S41). According to the display of the HTML file, the list of the application modules 141 to 14N, which can be currently used via the HTTP command dispatcher 120, is shown on the screen by using, for example, a list box of the Form tag. In addition, a "send" button is similarly displayed by using the Form tag.

If the user wants to use application module 141 among the application modules to be possibly used, the user selects (i.e., clicks) the application module 141 in the list box and then clicks the "send" button (see step S42). In the HTML file including a Form tag (generated by the HTML output device 130), a command directed to the HTTP command dispatcher 120 is defined in the addressee URL address designated using the Form tag. In addition, when the "send" button of the HTML file including a Form tag is clicked, information on the Ul components, input and designated by the user, is also included according to the relevant URL. For example, if "http://dispatcher/start_application" is designated in the addressee URL address, the URL (including the Ul component information) sent by the general Web browser 110 has a format such as:
"http://dispatcher/start_application&Iistbox=application_module 141 &command=initialize". In the above, the addressee UN and the Ul component information items are sent by connecting them via "&". This connection format is defined in the HTML specification.

In addition, the above method for describing the Ul component information, such as "the name of a component-the name of the selected item", is also defined in the HTML specification. The part "command initialize" indicates a combination of a variable name which is not related to the Ul component and is defined by the user, and the value of the variable. Here, the "user" is the describer of the relevant HTML file. In the HTML specification, such a variable name defined by the user and its value can be defined using the Form tag in the HTML file. The present case uses this function, and a command to be sent to the application module 141 is included in the HTML file when the HTML output device 130 generates the HTML file.

The HTTP command dispatcher 120 which has received this URL then identifies the identifier for the dispatcher (i.e., the part "dispatcher") in the URL. In the above case, the HTTP command dispatcher 120 then recognizes that the command indicates the activation of an application module by detecting the sent command "start_application" (see step S43). The HTTP command dispatcher 120 also refers to the Ul component information, and recognizes that the activation of the application module 141 has been requested. Accordingly, the HTTP command dispatcher 120 activates the application module 141, and sends the application module 141 the following command (here, "command=initialize") as an argument (see step S44).

The application module 141 detects the initial activation request from the user by receiving the argument such as "command=initialize", and makes the HTML file output device 130 generate an HTML file for the initial activation picture and sends the HTML file to the Web browser 110 (see steps S45 and S46). In an example of the HTML for the initial activation picture, a list of functions which can be used in this application is shown using the list box together with each information item displayed using text data. In order to use one of the functions, the user selects the target function in the list box and clicks the "send" button. Accordingly, the URL is generated in a process similar to that explained above, and is sent to the HTTP command dispatcher 120, and is further sent to the application module 141.

Various applications such as a mail application, a schedule application, or an image displaying application may be used as an application module, that is, the possible functions are not limited. In addition, this application module is operated at the client computer 100 side; thus, unlike the previously proposed case using the CGI script, overload data transmitting and receiving operations via a network do not occur; thus, no problem relating to the execution speed occur. In addition, the data necessary for displaying a result output from the application module is generated by the HTML output device 130 on the HTML file format, and the result is shown by and via the general browser 110; therefore, it is unnecessary for the application module itself to have a picture displaying function. In addition, the Ul components for receiving a user's input data are displayed via the browser by using the Form function of the HTML; therefore, it is also unnecessary for the application module itself to have a function for displaying the Ul components. Furthermore, the application module is operated on the client side; thus, the application module can access the sources of the client computer (such as data stored in the hard disk) with no limitation; thus, in the application module installed or generated in arrangements illustrative of the present invention, the user data of the client computer can be freely referred to and rewritten.

If the application module is a mail application, a list box including function names used in this application such as "newly receive", "delete", and "send" is shown in the initial activation picture. If the user selects the "newly receive" and clicks the "send" button, a command corresponding to this function is sent via the HTML dispatcher 120 to the mail application module, and the mail server is accessed by the mail application module so as to extract mail which is addressed to the user and has not yet been received. Then the results, including the contents of the mail and the list box of the functions possibly used in this mail application, are output as an HTML file by the HTML output device 130, and the file is sent to the Web browser 110 so that the output results are displayed.

According to the above operation, an application module using the Web browser as the Ul can be generated. In the arrangements being described, the address of the HTTP command dispatcher is designated for using the function of the proxy server of the Web browser 110. If a real proxy server is used, it is necessary for the HTTP command dispatcher to access the proxy server, instead of accessing the server directly designated by the URL address. It is preferable that the user can directly designate the address of the proxy server to the HTTP command dispatcher, and also in this case, no modification of the general Web browser is necessary.

In the above explanations of the present arrangements, an example using the Web browser suitable for the HTML as the Ul of the application is shown; however, a browser corresponding to another markup language other than the HTML, such as WML (wireless markup language) or XML (extensible markup language) may be used as the Ul of the application in a similar way.

It will be understood that although particular arrangements have been described, by way of example in illustration of the invention, variations and modifications thereof, as well as other arrangements, may be conceived wtihin the scope of the protection sought by the appended claims.

## Claims

1. A method of installing an application program used in a client-server system in which server computers (200) having Web servers and client computers (100) having Web browsers (110) are connected to each other via a network, and in which the client computer uses the Web browser as a user interface of an application program to be developed, the method including the steps of:
including an identifier for identifying a communication with the application program and a command of an instruction to the application program in an address in conformity with the description format of the URL address;
executing a process according to the instruction;
describing the result of the process and user interface components used in the application program in a data file by using a Form function provided in a specific markup language file; and
returning the data file to the relevant Web browser.

2. A method as claimed in claim 1, wherein the step of including an identifier and a command of an instruction includes inputting the identifier and the command in the URL format into a URL-input edit box generated by the relevant Web browser, so as to send on the URL generated by the input.

3. A method as claimed in claim 1, wherein the step of including an identifier and a command of an instruction includes:
embedding the target command in a specific markup language file in the URL format by using an anchor tag; and
sending the URL to the relevant Web browser by designating the anchor tag when the markup language file is displayed by the Web browser.

4. A method as claimed in claim 1, wherein the step of including an identifier and a command of an instruction includes:
storing the target command on the URL format in a file which is provided in the Web browser for storing the URL; and
sending the target command to the relevant Web browser by designating this file.

5. A system for installing an application program used in a client-server system in which server computers (200) having Web servers and client computers (100) having Web browsers (110) are connected to each other via a network, and the client computer uses the Web browser as a user interface of an application program to be developed, the application program installing system including:
a command dispatch section (120) for analysing a request in the URL format sent from the Web browser, and detecting whether the request which is sent is a general file request or a command of an instruction to the application program, wherein:
if the sent request is a general file request, the command dispatch section accesses the target server computer and downloads a target file, and sends the file to the Web browser which sent the request, or
if the sent request is a command of an instruction to the application program, the command dispatch section activates the target application program and sends the command to the application program; and
a markup language file output section (130) for sending the relevant Web browser a specific markup language file in which the result of the process according to the command of the instruction and user interface components used in the application program are described.

6. A computer-readable storage medium used in a client-server system in which server computers (200) having Web servers and client computers (100) having Web browsers (110) are connected to each other via a network, and the client computer uses the Web browser as a user interface of an application program to be developed, the medium storing a computer program for making the client computer execute an operation including the steps of:
receiving the URL address of the relevant Web browser;
analysing the received URL and determining whether the URL is a general URL address used by the Web browser for downloading a data file, or it is a URL address including a command of an instruction to an application program to be developed, wherein:
if the URL is a URL address including a command of an instruction to an application program to be developed:
analyzing the URL address and determining the target application program corresponding to the instruction, and activating the application program and sending the instruction to the application program;
making the application program which receives the instruction describe the result of a process according to the instruction and user interface components for receiving user inputs for enabling the user to use functions of the application program in a data file by using a function of a specific markup language program; and
returning the described data file to the relevant Web browser and using the Web browser as the user interface of the application program in a manner such that the result and the user interface components are displayed by the Web browser.
